# EUROPÄISCHE PATENTSCHRIFT

(11) **EP 0 548 783 B1**
(45) Veröffentlichungstag und Bekanntmachung des Hinweises auf die Patenterteilung: **06.03.1996**
(21) Anmeldenummer: 92121429.2
(22) Anmeldetag: 17.12.1992
(51) Int. Cl.: B65G 69/28

(54) **Verladeschiene**
Loading ramp
Rampe de chargement

(30) Priorität: 23.12.1991 DE 9115985 U
(43) Veröffentlichungstag der Anmeldung: 30.06.1993
(73) Patentinhaber: ALTEC ALUMINIUM LAGER TECHNIK GmbH, D-78224 Singen (DE)
(72) Erfinder: Schneble, Manfred, 7704 Gailingen (DE)
(74) Vertreter: Weiss, Peter, Dr. rer.nat.

(56) Entgegenhaltungen:
- CH-A- 452 439
- DE-A- 2 339 432
- DE-B- 1 292 582
- DE-U- 8 808 785
- DE-U- 9 115 985
- GB-A- 2 058 996

## Beschreibung

Die nachfolgende Erfindung betrifft eine Verladeschiene aus einzelnen, quer zu einer Auffahrtrichtung angeordneten Profilen.

Verladeschienen sind in vielfältiger Form und Ausführung bekannt. Sie hängen entweder an einer Ladefläche eines LKW oder sonstigen Fahrzeugs oder werden an die Ladefläche an oder auf die Ladefläche aufgelegt. Ferner sind sie auch zum Beladen von Flugzeugen oder anderen Transportmitteln geeignet.

In vielen Fällen werden die Verladeschienen von Fahrzeugen befahren, welche durch das Transportmittel befördert werden sollen. Dabei spielen vor allem Raupenfahrzeuge eine große Rolle, wie beispielsweise Bagger, Panzer oder sonstige Bau- bzw. Gartenfahrzeuge. Diese besitzen Stahl- oder Gummiketten, welche in der Regel über zwei oder mehrere beabstandete Räder als Endloskette geführt und umgelenkt sind. Bekannt ist hierbei das Problem, daß sich der Abstand zwischen den einzelnen quer verlaufenden Kettenleisten oder -noppen in den Umlenkradien vergrößert, während er sich dann wieder beim Übergang in den Längslauf verringert. D.h., die Kettenleisten machen eine krallartige Bewegung, welche sich sehr negativ auf die Verladeschiene auswirkt. Wegen der Steifigkeit, Stabilität und Rutschfestigkeit sind bislang die Profile für diese Verladeschiene zick-zack-artig oder als trapezartig aneinandergereihte U's ausgebildet. Bei der krallartigen Bewegung umklammert die Kettenleiste dieses umgekehrte U, so daß der Verschleiß des Profils wesentlich erhöht ist oder aber die Gumminoppen beschädigt werden können. Ferner kommt es auch häufig zum Motorstillstand des Fahrzeuges, wenn sich dessen Kette in den Profilen verklemmt hat.

Der vorliegenden Erfindung liegt die Aufgabe zugrunde, eine Verladeschiene zu schaffen, welche auch beim Befahren mit Kettenfahrzeugen verschleiß- sowie rutschfest ist und keine Möglichkeit des Verklemmens bietet.

Zur Lösung dieser Aufgabe führt, daß jedes Profil aus einer Mehrzahl von hintereinander quer zur Auffahrtrichtung angeordneten Kammern besteht, die miteinander über in Auffahrtrichtung schräg nach oben verlaufende Brückenstreifen verbunden sind.

Insbesondere soll dabei der Brückenstreifen an der hinteren Kammer von einer oberen Kante unter Ausbildung einer Schulter einen Abstand einhalten, während er auf die vordere Kammer nahe deren hinteren oberen Kante auftrifft. Durch diese Ausbildung wird gewährleistet, daß sich die Kette eines Kettenfahrzeuges nicht um einen entsprechenden Profilteil legen kann, da keine zweiseitige Angriffsfläche besteht. Die Kette bzw. eine entsprechende Kettenleiste kann sich lediglich an der Schulter anlegen, jedoch ist für eine andere Kettenleiste keine Gegenfläche vorhanden. Die Schulter selbst bildet dagegen ein gutes Widerlager, so daß ein Befahren einer derartigen Verladeschiene durch ein Fahrzeug erheblich verbessert und die Rutschfestigkeit erhöht ist.

Da der meiste Angriff sowohl beim Auffahren, wie auch beim Abfahren an der Schulter erfolgt, sollte hier das erfindungsgemäße Profil eine Materialanhäufung aufweisen.

Die gesamte Verladeschiene besteht bevorzugt aus einzelnen Querprofilabschnitten. Zur Verbindung sind in der Regel zwei äußere Längsschienen vorgesehen, in denen die Querprofilabschnitte geführt sind. Dabei sollten aber auch die Querprofilabschnitte miteinander selbst gekoppelt sein. Dies geschieht bevorzugt durch eine Rastnase, welche einem vorderen Brückenstreifen angeformt ist, wobei diese Rastnase beim Zusammenbauen in eine entsprechende Rastnut am nachfolgenden Profil eingreifen kann. Eine Abknickung an der Rastnase bewirkt im Zusammenspiel mit einer Rastklinke an der Rastnut eine gute Halterung. Allerdings sind hier auch andere Kopplungsmöglichkeiten denkbar.

Die Kammern können, falls es die Stabilität erlaubt, offen ausgebildet sein. Bevorzugt sind sie jedoch geschlossen und querschnittlich zur Auffahrtrichtung geneigt ausgebildet. D.h, daß die Kammern querschnittlich parallelogrammartig sind. Auch hierdurch wird die Stabilität nochmals verbessert und die Quersteifigkeit erhöht.

Weitere Vorteile, Merkmale und Einzelheiten der Erfindung ergeben sich aus der nachfolgenden Beschreibung eines bevorzugten Ausführungsbeispiels, sowie anhand der Zeichnung; diese zeigt in
Figur 1 einen querschnitt durch ein erfindungsgemäßes Profil für eine Verladeschiene;
Figur 2 Querschnitte durch aneinander gekoppelte Profile gemäß Figur 1 zur Bildung einer Verladeschiene.

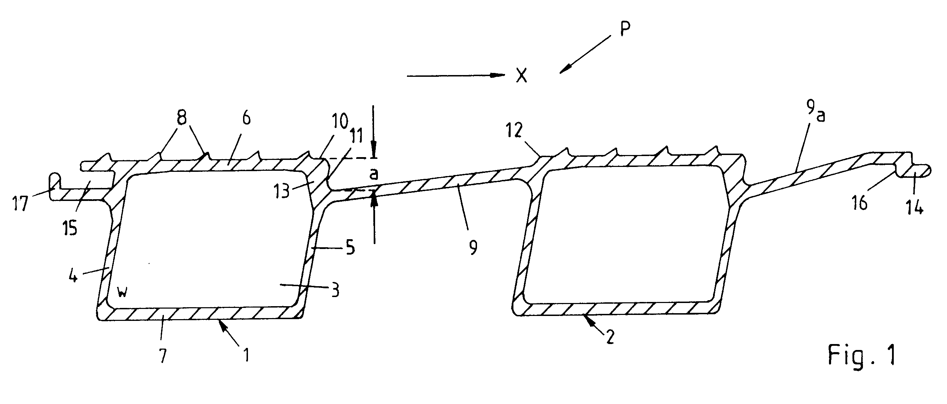

Ein erfindungsgemäßes Profil P zur Ausbildung einer Verladeschiene weist gemäß Figur 1 zwei querschnittlich parallelogrammartige Kammern 1 und 2 auf, wobei jeweils ein Innenraum 3 von zwei Seitenwänden 4 und 5 sowie einer Oberfläche 6 und einer Unterfläche 7 umgrenzt ist.

Zur Erhöhung der Rutschfestigkeit ist die Oberfläche 6 noch mit einer Riffelung versehen, wobei entsprechende vorspringende Querstege mit 8 gekennzeichnet sind.

Die Kammern 1 und 2 sind im übrigen in Auffahrtrichtung x querschnittlich prallelogrammartig geneigt ausgebildet, so daß jeweils die hintere Seitenwand 4 mit der Unterfläche 7 einen spitzen Winkel w ausbildet. Hierdurch wird insgesamt die Steifigkeit des Profils P und seine Stabilität verbessert.

Die zwei Kammern 1 und 2 sind über einen Brückenstreifen 9 miteinander verbunden, der zwischen den Kammern 1 und 2 quer geneigt angeordnet ist. Dies bedeutet, daß der Brückenstreifen 9 von einer oberen Kante 10 der Oberfläche 6 der in Fahrtrichtung x zurückliegenden Kammer 1 einen Abstand a einhält, so daß hier eine Schulter 11 ausgebildet ist. Der Brückenstreifen 9 verläuft dann schräg nach oben zu der in Auffahrtrichtung x vorliegenden Kammer 2 und trifft dort an oder nahe der hinteren Kante 12 der Kammer 2 auf diese auf.

Bevorzugt ist im Bereich der Schulter 11 bzw. des Abstandes a die Kammer 1 bzw. 2 durch Materialanhäufung 13 verstärkt ausgebildet. Hierdurch wird einem erhöhten Verschleiß in diesem Bereich Rechnung getragen.

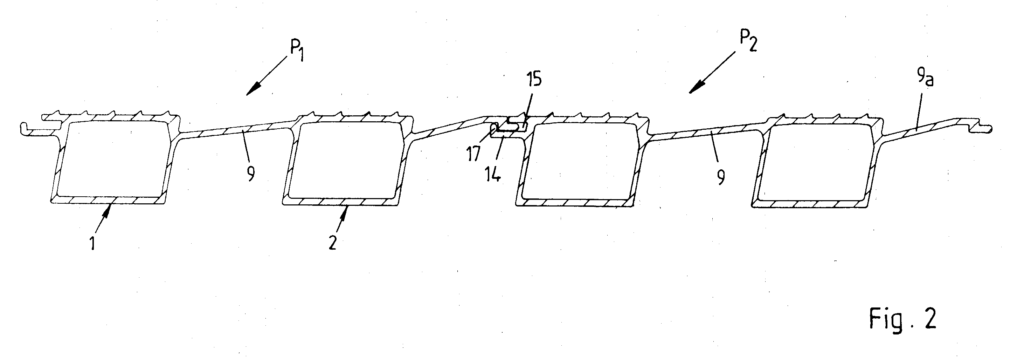

Zur Kopplung einzelner Profile miteinander, wie in Figur 2 dargestellt, ist an einen Brückenstreifen 9a der vorderen Kammer 2 eine Rastnase 14 angeformt, welche in einer Rastnut 15 an der hinteren Kammer 1 eingreifen kann. Die Rastnase 14 besitzt eine fußähnliche Ausgestaltung, während die Rastnut 15 als entsprechender Schuh ausgebildet ist. In Gebrauchslage hintergreift eine Abknickung 16 der Rastnase 14 eine entsprechende Rastklinke 17 der Rastnut 15, so daß einzelne Profile P aneinander gehängt werden können. Dies ist in Figur 2 mit den Bezugszeichen P1 und P2 gekennzeichnet.

## Patentansprüche

1. Verladeschiene aus einzelnen, quer zu einer Auffahrtrichtung angeordneten Profilen,
dadurch gekennzeichnet,
daß jedes Profil aus einer Mehrzahl von hintereinander quer zur Auffahrtrichtung angeordneten Kammern (1, 2) besteht, die miteinander über in Auffahrtrichtung (x) schräg nach oben verlaufende Brückenstreifen (9, 9a) verbunden sind.

2. Verladeschiene nach Anspruch 1, dadurch gekennzeichnet, daß der Brückenstreifen an der hinteren Kammer (1) von einer oberen Kante (10) unter Ausbildung einer Schulter (11) einen Abstand (a) einhält, während er auf die vordere Kammer (2) nahe deren hinteren oberen Kante (12) auftrifft.

3. Verladeschiene nach Anspruch 2, dadurch gekennzeichnet, daß jede Kammer (1, 2) im Bereich der Schulter (11) eine Materialanhäufung (13) aufweist.

4. Verladeschiene nach einem der Ansprüche 1 bis 3, dadurch gekennzeichnet, daß ein vorderer Brückenstreifen (9a) eines Profils (P) eine Rastnase (14) zum Eingriff in eine Rastnut (15) am nächstfolgenden Profil ausbildet.

5. Verladeschiene nach Anspruch 4, dadurch gekennzeichnet, daß an der Rastnase (14) eine Abknickung (16) ausgebildet ist, welche in Gebrauchslage eine Rastklinke (17) an der Rastnut (15) hintergreift.

6. Verladeschiene nach wenigstens einem der Ansprüche 1 bis 5, dadurch gekennzeichnet, daß die Kammern (1, 2) geschlossen und querschnittlich zur Auffahrtrichtung (x) geneigt ausgebildet sind.

## Claims

1. Loading rail formed from individual profiles disposed transversely relative to a direction of travel, characterised in that each profile comprises a plurality of chambers (1, 2), which are disposed one behind the other transversely relative to the direction of travel and are interconnected to one another by bridging straps (9, 9a) which extend in an upwardly inclined manner when viewed with respect to the direction of travel (x).

2. Loading rail according to claim 1, characterised in that the bridging strip on the rear chamber (1) maintains a spacing (a) from an upper edge (10) so as to form a shoulder (11), while it encounters the front chamber (2) near the rear upper edge (12) thereof.

3. Loading rail according to claim 2, characterised in that each chamber (1, 2) has an accumulation of material (13) in the region of the shoulder (11).

4. Loading rail according to one of claims 1 to 3, characterised in that a front bridging strap (9a) of a profile (P) forms a locking projection (14) for engagement in a locking groove (15) in the subsequent profile.

5. Loading rail according to claim 4, characterised in that an angular portion (16) is provided at the locking projection (14) engages behind a pawl (17) at the locking groove (15) in the position of use.

6. Loading rail according to at least one of claims 1 to 5, characterised in that the chambers (1, 2) are closed and have a cross-section which is inclined relative to the direction of travel (x).

## Revendications

1. Rampe de chargement formée de profilés séparés disposés transversalement à la direction de circulation, caractérisée en ce que chaque profilé se compose de plusieurs chambres (1, 2) situées les unes derrière les autres transversalement à la direction de circulation, ces chambres étant reliées par des bandes de tablier de pont (9, 9a) remontant en biais dans la direction de circulation (x).

2. Rampe de chargement selon la revendication 1, caractérisée en ce que la bande de tablier de pont comporte, au niveau de la chambre arrière (1), une distance (a) par rapport à une arête supérieure (10) en formant un épaulement (11), alors qu'elle arrive sur la chambre avant (2) à proximité de son arête supérieure arrière (12).

3. Rampe de chargement selon la revendication 2, caractérisée en ce que chaque chambre (1, 2) comporte une accumulation de matière (13) dans la zone de l'épaulement (11).

4. Rampe de chargement selon l'une des revendications 1 à 3, caractérisée en ce qu'une bande de tablier avant (9a), d'un profité (P) est réalisée sous forme d'un bec d'accrochage (14) pour venir en prise dans une rainure d'accrochage (15) du profité suivant.

5. Rampe de chargement selon la revendication 4, caractérisée en ce que le bec d'accrochage (14) comporte un coude (16) qui, en position d'utilisation, vient prendre derrière un verrou d'accrochage (17) prévu au niveau de la rainure d'accrochage (15).

6. Rampe de chargement selon au moins l'une des revendications 1 à 5, caractérisée en ce que les chambres (1, 2) sont fermées et ont une section de forme inclinée dans la direction de circulation (x).
